# EUROPÄISCHE PATENTSCHRIFT

(11) **EP 3 322 553 B1**
(45) Veröffentlichungstag und Bekanntmachung des Hinweises auf die Patenterteilung: **05.11.2025**
(21) Anmeldenummer: 16774868.0
(22) Anmeldetag: 09.09.2016
(51) Int. Cl.: B23K 1/00, B23K 9/04, B23K 26/342, B23P 6/00, F01D 5/00, B23K 101/00, B23K 103/18

(54) **VERFAHREN ZUR HERSTELLUNG VON PRODUKTEN AUS STAHL ODER TITAN MIT EINER AUSSCHEIDUNGSHÄRTENDEN NICKELBASISLEGIERUNG UND BAUTEIL**
METHOD FOR PRODUCING STEEL OR TITANIUM PRODUCTS WITH A NICKEL-BASED SUPER ALLOY AND COMPONENT
PROCÉDÉ DE FABRICATION DE L'ACIER OU TITANE AVEC UN SUPERALLIAGE À BASE DE NICKEL ET COMPOSANT

(30) Priorität: 07.10.2015 DE 102015219351
(43) Veröffentlichungstag der Anmeldung: 23.05.2018
(73) Patentinhaber: Siemens Energy Global GmbH & Co. KG, 81739 München (DE)
(72) Erfinder: BETTENTRUP, Jörn, 46282 Dorsten (DE); BRUSSK, Stefan, 45479 Mülheim an der Ruhr (DE); LUITHLE, Alexander, 44789 Bochum (DE); SCHÜRHOFF, Jörg, 58730 Fröndenberg (DE)
(86) Internationale Anmeldenummer: PCT/EP2016/071260
(87) Internationale Veröffentlichungsnummer: WO 2017/060033

(56) Entgegenhaltungen:
- EP-A2- 0 822 319
- EP-A2- 2 684 981
- US-A1- 2015 275 687

## Beschreibung

Die Erfindung betrifft die Herstellung von Produkten aus Stahl oder Titan, insbesondere aus dem Hochtemperaturbereich, wobei für die Schweißung eine ausscheidungshärtende Nickelbasislegierung verwendet wird und ein Bauteil.

Die EP 2 684 981 B1 offenbart ein Verfahren zur Beschichtung und/oder Reparatur, bei dem gleiche Materialien, bezogen auf das Substrat, als Schichtmaterial verwendet werden.

Bei der Revision von Niederdruckschaufeln von Dampfturbinen aus Stahl oder Titan werden - abhängig vom Ausmaß der Schädigung - folgende Maßnahmen ergriffen:
1. Zeitlich limitierter Weiterbetrieb der geschädigten Schaufel im Rahmen der Zulässigkeit, mit erneutem Inspektionsintervall und mit dem Nachteil, dass durch den Materialabtrag die Eigenfrequenz der Schaufel abweicht als auch der Wirkungsgrad eingeschränkt ist.
2. Austausch der Schaufel durch eine Ersatzschaufel/Neuteil, falls das Ausmaß der Schädigung einen weiteren Betrieb nicht zulässt.
3. Schweißtechnische Reparatur der Schaufel mit einer Kobaltbasislegierung, die sehr tropfenschlagerosionsbeständig ist. Die Verarbeitung ist durch die schlechte Schweißeignung sehr schwierig und aufwändig. Der große Materialeigenschaftsunterschied zwischen Reparaturwerkstoff und Grundwerkstoff kann zu Eigenspannungen, Rissen und ggf. zu Abplatzungen führen.
4. Wie 3, aber mit einer Unterpufferung, welche aber zusätzlichen Aufwand bedeutet.

Es ist daher Aufgabe der Erfindung, oben genannte Probleme zu lösen.

Die Aufgabe wird gelöst durch ein Verfahren gemäß Anspruch 1 und ein Bauteil gemäß Anspruch 2.

In den Unteransprüchen sind weitere vorteilhafte Maßnahmen aufgelistet, die beliebig miteinander kombiniert werden können.

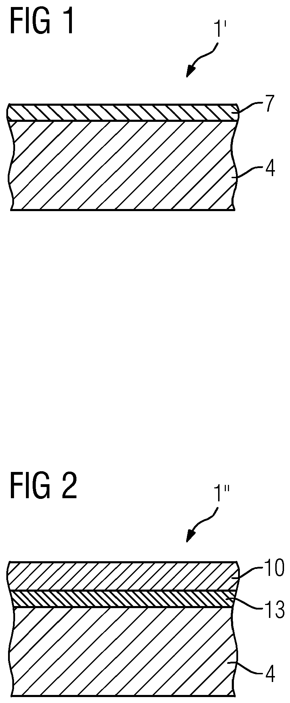

Die Figuren 1, 2 zeigen Ausführungsbeispiele der Erfindung.

Nickelbasiswerkstoffe können im ausscheidungsgehärteten Zustand nach geeigneter Wärmebehandlung sehr tropfenschlagerosionsbeständig sein und zeichnen sich sogar durch ihre gute Schweißeignung im Vergleich zu der Gruppe der Werkstoffe auf Kobaltbasis aus. Eine aufwändige Unterpufferung ist nicht erforderlich.

Eine weitere Möglichkeit ist die Einlötung von Formteilen (Inserts).

Nickelbasissuperlegierungen mit der Ausscheidungshärtung auf der Basis γ` sind bekannt aus dem Gasturbinenbau, bei dem wiederum ebenfalls ausscheidungshärtende Nickelbasislegierungen verwendet werden, um diese zu reparieren (artgleiche Reparatur).

Unerwartet wurden in der Kombination ausscheidungshärtender Nickelbasislegierungen und Substrat 4 aus Stahl oder Titan, gemeint sind damit Titan und Titanlegierungen als Material, (Fig. 1, 2) sehr gute Ergebnisse erzielt, die der Fachmann zum einen nicht erwartet hätte und auch nie angewendet hätte, da Substrate immer werkstoffgleich bzw. werkstoffähnlich geschweißt werden.

Das Formteil 10 (Einsatz oder Insert), das eingeschweißt oder ein- bzw. aufgelötet wird, ist dann ebenfalls aus einer ausscheidungshärtenden Nickelbasislegierung.

Das Formteil 10 ist oder wird wärmebehandelt vor oder nach der Anbindung. Durch einfaches stoffschlüssiges Fügen werden Insert 10 und Substrat 4 zusammengefügt und weisen dann eine Anbindungs- oder Lötschicht 13 auf (Fig. 2).

Bei der Einlötung eines Formteils 10 zur Neuherstellung oder Reparatur eines Bauteils 1" kann jedes beliebige Lot verwendet werden, wobei das Formteil 10 ebenfalls eine ausscheidungshärtende Nickelbasislegierung aufweist.

Vorzugsweise werden Eintrittskanten von Turbinenschaufeln, insbesondere von Dampfturbinen, mit dem Verfahren hergestellt oder repariert.

Die Nickelbasislegierung als Formteil 10 ist in oder auf dem Substrat 4 des Bauteils 1', 1" vorzugsweise nur lokal vorhanden.

Die ausscheidungshärtende Nickelbasislegierung weist vorzugsweise eine folgende Zusammensetzung auf:
einen Chromgehalt (Cr) von 10Gew.-% bis zu 21Gew.-%
   und/oder
einen Niobgehalt (Nb) von 0,1Gew.-% bis 5,5Gew.-%
   und/oder
einen Molybdängehalt von 0,1Gew.-% bis zu 3,3Gew.-%, insbesondere IN 718.

Die verwendete Nickelbasislegierung weist vorzugsweise einen γ'-Anteil ≤ 50%, insbesondere ≤ 40%, ganz insbesondere ≤ 30% auf.

X20Cr13, X5CrNiCuNb16-4 oder TiAl6V4 werden vorzugsweise als Material für das Substrat 4 verwendet.

## Patentansprüche

1. Verfahren zur Herstellung,
insbesondere zur Reparatur,
von einem Bauteil (1', 1")
mit einem Substrat (4),
insbesondere von Turbinenschaufeln aus Titan oder Stahl, hergestellt aus martensitisch oder ausscheidungshärtenden hochchromhaltigen Stählen,
mit einem aufgebrachten Formteil (10),
bei dem ein Formteil (10) aus einer ausscheidungshärtenden Nickelbasislegierung mit dem Substrat (4) verbunden wird.

2. Bauteil (1', 1"),
insbesondere hergestellt nach Anspruch 1,
das ein Substrat (4) aus Stahl oder aus Titan aufweist, aus martensitisch oder ausscheidungshärtenden hochchromhaltigen Stählen, und
nur lokal Material aus einer ausscheidungshärtenden Nickelbasislegierung aufweist.,
bei dem ein Formteil (10) aus einer ausscheidungshärtenden Nickelbasislegierung mit dem Substrat (4) verbunden ist.

3. Verfahren oder Bauteil nach Anspruch 1 oder 2,
bei dem das Formteil (10) aus einer ausscheidungshärtenden Nickelbasislegierung in oder auf das Substrat (4) gelötet wird oder ist.

4. Verfahren oder Bauteil nach einem oder mehreren der Ansprüche 1, 2 oder 3,
bei dem die ausscheidungshärtende Nickelbasislegierung einen Chromgehalt (Cr) von 10Gew.-% bis zu 21Gew.-% und/oder
einen Niobgehalt (Nb) von 0,1Gew.-% bis 5,5Gew.-% und/oder
einen Molybdängehalt von 0,1Gew.-% bis zu
3,3Gew.-% aufweist,
insbesondere IN 718 aufweist.

5. Verfahren oder Bauteil nach einem oder mehreren der Ansprüche 1, 2, 3 oder 4,
die einen y'-Anteil ≤ 50%,
insbesondere ≤ 40%,
ganz insbesondere ≤ 30%,
für die ausscheidungsgehärtete Nickelbasislegierung aufweist.

6. Verfahren oder Bauteil nach einem oder mehreren der Ansprüche 1, 2, 3, 4 oder 5,
bei dem X20Cr13, X5CrNiCuNb16-4 oder TiAl6V4 als Material für das Substrat (4) verwendet wird.

## Claims

1. Method for producing,
in particular for repairing,
a component (1', 1'')
having a substrate (4),
in particular turbine blades made of titanium or steel, made of martensitic or precipitation-hardening chromium-rich steels, with an affixed shaped part (10),
in which a shaped part (10) made of a precipitation-hardening nickel-based alloy is connected to the substrate (4).

2. Component (1', 1''),
in particular produced according to Claim 1,
having a substrate (4) made of steel or titanium, of martensitic or precipitation-hardening chromium-rich steels, and
having only locally material of a precipitation-hardening nickel-based alloy,
in which a shaped part (10) made of a precipitation-hardening nickel-based alloy has been connected to the substrate (4).

3. Method or component according to Claim 1 or 2,
in which the shaped part (10) made of a precipitation-hardening nickel-based alloy is brazed into or onto the substrate (4).

4. Method or component according to one or more of Claims 1, 2 and 3,
in which the precipitation-hardening nickel-based alloy has a chromium content (Cr) of 10 wt% to 21 wt%
and/or
a niobium content (Nb) of 0.1 wt% to 5.5 wt%
and/or
a molybdenum content of 0.1 wt% to
3.3 wt%,
in particular IN 718.

5. Method or component according to one or more of Claims 1, 2, 3 and 4,
having a y' fraction ≤ 50%,
in particular ≤ 40%,
very particularly ≤ 30%,
for the precipitation-hardened nickel-based alloy.

6. Method or component according to one or more of Claims 1, 2, 3, 4 and 5,
in which X20Cr13, X5CrNiCuNb16-4 or TiAl6V4 is used as the material for the substrate (4).

## Revendications

1. Procédé de fabrication,
en particulier de réparation,
d'une pièce (1', 1")
comprenant un substrat (4),
en particulier d'aubes de turbine en titane ou en acier, fabriqué en acier martensitique ou durci par précipitation à forte teneur en chrome,
comprenant une pièce (10) formée déposée,
dans lequel on relie au substrat (4) une pièce (10) formée en un alliage à base de nickel durcissant par précipitation.

2. Pièce (1', 1"),
en particulier fabriquée suivant la revendication 1,
qui a un substrat (4) en acier ou en titane, en acier martensitique, ou durci par précipitation à forte teneur en chrome, et
n'a que localement du matériau en un alliage à base de nickel durcissant par précipitation.,
dans lequel une pièce (10) formée en un alliage à base de nickel durcissant par précipitation est reliée au substrat (4).

3. Procédé ou pièce suivant la revendication 1 ou 2,
dans lequel la pièce (10) formée en un alliage à base de nickel durcissant par précipitation est brasée sur le substrat (4).

4. Procédé ou pièce suivant l'une ou plusieurs des revendications 1, 2 ou 3,
dans lequel l'alliage à base de nickel durcissant par précipitation a une teneur en chrome (Cr) allant de 10 % en poids à 21 % en poids
et/ou
une teneur en niobium (Nb) allant de 0,1 % en poids à 5,5 % en poids
et/ou
une teneur en molybdène allant de 0,1 % en poids à 3,3 % en poids,
en étant notamment de l'IN 718.

5. Procédé suivant l'une ou plusieurs des revendications 1, 2, 3 ou 4,
qui a une proportion γ' ≤ 50 %,
en particulier ≤ 40 %,
d'une manière tout à fait particulière ≤ 30 %,
de l'alliage à base de nickel durci par précipitation.

6. Procédé de fabrication suivant l'une ou plusieurs des revendications 1, 2, 3, 4 ou 5,
dans lequel on utilise X20Cr13, X5CrNiCuNb16-4 ou TiAl6V4 comme matériau du substrat (4).
